# EUROPEAN PATENT APPLICATION

(11) **EP 1 324 571 A2**
(43) Date of publication of application: **02.07.2003**
(21) Application number: 02028183.8
(22) Date of filing: 19.12.2002
(51) Int. Cl.: H04M 1/02

(54) **Mobile terminal device**

(30) Priority: 28.12.2001 JP 2001400123
(71) Applicant: MATSUSHITA ELECTRIC INDUSTRIAL CO., LTD., Kadoma-shi, Osaka 571-8501 (JP)
(72) Inventor: Kiuchi, Shinya, Iizuka-shi, Fukuoka-ken, 820-0066 Iizuka (JP); Ikeda, Jun, Fukuoka-shi, Sukuoa-kan, 814-0001 Fukuoa (JP); Ojima, Shuichi, Fukuoka-shi, Sukuoa-ken, 814-0064 Fukuoa (JP); Hirashima, Tsuyoshi, Fukuoka-ken, 811-2413 Kasuya-gun (JP); Hata, Ryouta, Iizuka-shi, Fukuoka-ken, 820-0065 Iizuka (JP); Kagami, Kenichi, Kanagawa-ken, 221-0002 Yokohama (JP)
(74) Representative: Balsters, Robert

(57) **Abstract**

A fold-up mobile terminal device comprising a lower case (1) having a key operating portion (11), an upper case (2) having a display portion, a coupling portion (3) which makes the lower case (1) and upper case (2) rotatable, and a turnover preventing portion (4). The turnover preventing portion (4) is attached to the rear of the upper case (2), which is the direction where a turnover is most likely to occur, in a direction approximately the same as that of a supporting surface of the lower case (1).

## Description

The present invention relates to a mobile terminal device which can be used by being set on a base in a stable condition without being held by a user with his/her hand.

In recent years, mobile terminal devices such as mobile telephones have been loaded with a camera, therefore, users can easily shoot moving images. Herein, if a user him/herself holds a mobile terminal device in his/her hand and carries out shooting, camera shakes easily occur. In order to prevent camera shakes, it can be considered to place the mobile terminal device on a flat base for use. However, even in such a case, the mobile terminal device must have a stable posture on the base.

As literature in which a mobile terminal device can be set on a base in a stable condition, Patent Literature 1 and Patent Literature 2 exist. In Patent Literature 1 (Japanese Unexamined Patent Publication No. 2000-307701 (Pages 2-3, Fig. 2)), a flip to cover an operating portion is utilized in a straight-type mobile terminal. In addition, in Patent Literature 2 (Japanese Unexamined Patent Publication No. 2001-136252 (Page 3, Fig. 3-Fig. 6)), supporting legs are provided on the lower side of a hinge portion in a fold-up mobile terminal so that stability of the mobile terminal device is improved.

However, currently, the majority of mobile terminal devices are of a fold-up structure. Accordingly, such a technique utilizing a flip as described in Patent Literature 1 cannot be applied to mainstream mobile terminal devices. In addition, in a technique described in Patent Literature 2, the supporting legs cannot support the outside of the hinge portion, therefore, turnover preventing effect is insufficient.

Furthermore, if a mobile terminal device is loaded with a camera, it becomes necessary to change the angle of the upper case so that the display portion becomes easily viewed and an object can be easily shot by the camera, however, in the technique described in Patent Literature 2, the degree of freedom of the supporting legs is extremely small against an angle created between the upper case and lower case, therefore, if a user changes this angle, the supporting legs hardly change. Therefore, there exists a problem such that the supporting legs are not extended when needed or the supporting legs are extended when not needed.

Herein, in general, a display portion is provided on the upper case, and with an improvement in performance, a display device of the display portion has become heavy. In addition, as the lower case is lightened via downsizing along with a reduction in weight of mobile terminals, the mobile terminal device has a strong tendency toward a top-heavy weight balance as a whole. In addition, the lower case is merely a handheld size and its base area is small.
Accordingly, the upper case cannot be easily supported by the lower case alone, and even if the mobile terminal device is set on a base, it easily turns over in most cases.

Therefore, it is an object of the present invention to provide a fold-up mobile terminal device which is excellent in stability when being set on a base.
A first aspect of the present invention provides a mobile terminal device comprising: a lower case having a supporting surface, formed so as to be placed on a base by bringing the supporting surface into contact with the base, an upper case, a coupling portion which couples the upper case and the lower case so as to be foldable, so that the front surface of the upper case and the front surface of the lower case are faced to each other in a condition where the upper case and the lower case are closed, and a turnover preventing portion to extend the supporting surface.

With this structure, the turnover preventing portion extends the supporting surface, so that setting stability of the mobile terminal device can be improved.

A second aspect of the present invention provides a mobile terminal device as defined in the first aspect of the present invention, wherein a display portion is disposed on the front surface of the upper case, a key operating portion is disposed on the front surface of the lower case.

With this structure, setting stability of the mobile terminal device can be improved, though the mobile terminal device whose upper case has a heavy display portion is liable to be instable.

A third aspect of the present invention provides a mobile terminal device as defined in the second aspect of the present invention, further comprising a camera for shooting images, wherein when the turnover preventing portion reaches a condition where the supporting surface is extended by the turnover preventing portion, images shot by the camera are displayed in a left-to-right reversed manner in the display portion.

With this structure, the display portion can be used like a mirror.

A fourth aspect of the present invention provides a mobile terminal device as defined in the first aspect of the present invention, wherein the upper case is greater in weight than the lower case.

With this structure, setting stability of the mobile terminal device can be improved, though the mobile terminal device which has a top-heavy weight balance is liable to be instable.

A fifth aspect of the present invention provides a mobile terminal device as defined in the first aspect of the present invention, wherein the turnover preventing portion is provided so as to be slidable with respect to the lower case, and the supporting surface is extended by a protrusion of the turnover preventing portion from the lower case.

With this structure, when the user slides the turnover preventing portion, setting stability can be easily improved.

A sixth aspect of the present invention provides a mobile terminal device as defined in the fifth aspect of the present invention, further comprising a sliding mechanism which determines a sliding amount of the turnover preventing portion according to an angle created by the upper case and the lower case.

With this structure, when the upper case and the lower case are opened, the turnover preventing portion extends the supporting surface and setting stability can be improved.

A seventh aspect of the present invention provides a mobile terminal device as defined in the first aspect of the present invention, wherein the turnover preventing portion is provided so as to be rotatable with respect to the lower case, between a closing position where the same is in contact with the lower case and a opening position where the same is distant from the lower case, and the supporting surface is extended by a rotation of the turnover preventing portion to the opening position.

With this structure, when the turnover preventing portion is rotated, the turnover preventing portion extends the supporting surface and setting stability can be improved.

An eighth aspect of the present invention provides a mobile terminal device as defined in the first aspect of the present invention, wherein the turnover preventing portion is composed of a plate-like member to extend the supporting surface.

With this structure, using the base of the plate-like member, the turnover preventing portion extends the supporting surface and setting stability can be improved.

A ninth aspect of the present invention provides a mobile terminal device as defined in the first aspect of the present invention, wherein a battery is disposed in the turnover preventing portion.

With this structure, an originally equipped part can be used as the turnover preventing portion.

A tenth aspect of the present invention provides a mobile terminal device as defined in the first aspect of the present invention, wherein the turnover preventing portion is composed of a stick-like member to extend the supporting surface.

With this structure, when the stick-like member is extended/retracted, the turnover preventing portion extends the supporting surface and setting stability can be improved.

An eleventh aspect of the present invention provides a mobile terminal device as defined in the tenth aspect of the present invention, wherein the stick-like member comprises a stretchable antenna.

With this structure, an originally equipped part can be used as the turnover preventing portion. When the antenna is not stretched but contracted, the turnover preventing portion can be compactly stored so as not to become an obstacle.

A twelfth aspect of the present invention provides a mobile terminal device as defined in the first aspect of the present invention, further comprising means operable to inform a user that the turnover preventing portion has reached a condition to extend the supporting surface.

With this structure, according to the information, the user can know extension of the supporting surface and can get a good user interface.

A thirteenth aspect of the present invention provides a mobile terminal device comprising: a lower case having a supporting surface, formed so as to be placed on a base by bringing the supporting surface into contact with the base, an upper case, and a coupling portion which couples the upper case and the lower case so as to be foldable, so that the front surface of the upper case and the front surface of the lower case are faced to each other in a condition where the upper case and the lower case are closed, wherein the coupling portion couples the upper case and the lower case so that the upper case can take, against the lower case, a turnover preventing posture where the center of gravity of the upper case is located at the lower case.

With this structure, when the upper case and the lower case take the turnover preventing posture, stability can be improved.

A fourteenth aspect of the present invention provides a mobile terminal device as defined in the thirteenth aspect of the present invention, wherein with a turnover preventing posture, the back surface of the upper case and the front surface of the lower case are faced to each other.

With this structure, when the upper case and the lower case are opened, the user can operate the front surface of the lower case.

The above, and other objects, features and advantages of the present invention will become apparent from the following description read in conjunction with the accompanying drawings, in which like reference numerals designate the same elements.
Fig. 1 is a perspective view of a mobile terminal device according to Embodiment 1 of the present invention;
Fig. 2 is a view for explaining an operation of a turnover preventing portion of the same;
Fig. 3 is a view for explaining an operation of a turnover preventing portion of the same;
Fig. 4 is a view for explaining an operation of a turnover preventing portion of the same;
Fig. 5 is an explanatory view of a sliding mechanism;
Fig. 6 is a perspective view of a mobile terminal device according to Embodiment 2 of the present invention;
Fig. 7 is a perspective view of a mobile terminal device according to Embodiment 3 of the present invention;
Fig. 8 is a perspective view of the same mobile terminal device;
Fig. 9(a) is a perspective view of a mobile terminal device according to Embodiment 4 of the present invention, Fig. 9(b) and Fig. 9(c) are views for explaining an operation of the same mobile terminal device;
Fig. 10(a) and Fig. 10(b) are side views of the same mobile terminal device; and
Fig. 11(a) is a perspective view of a mobile terminal device according to Embodiment 5 of the present invention, Fig. 11(b) and Fig. 11(c) are views for explaining an operation of the same mobile terminal device.

Hereinafter, embodiments of the present invention will be described in detail with reference to the drawings.

### (Embodiment 1)

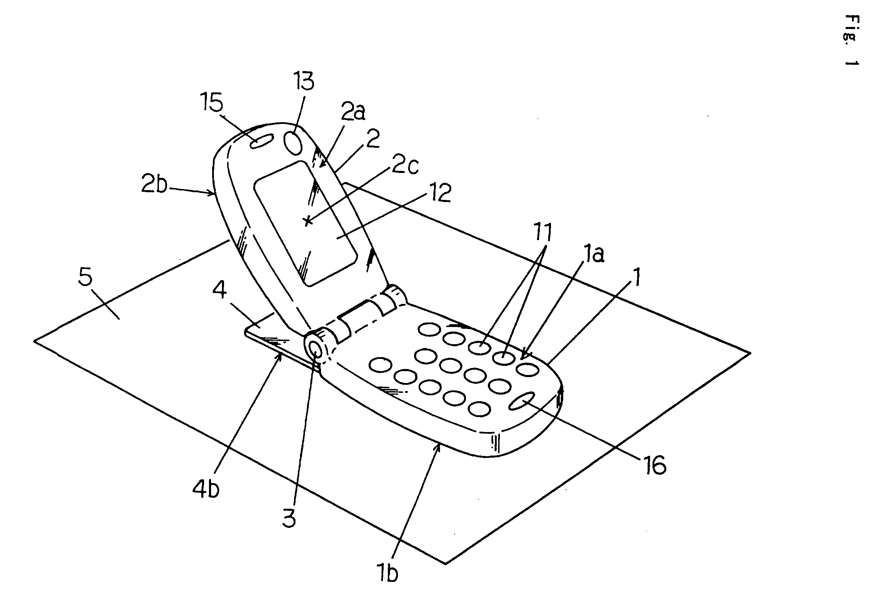

Fig. 1 through Fig. 5 concern Embodiment 1. In Embodiment 1, a turnover preventing portion is constructed from a plate-like member, and a supporting surface of a lower case is extended by sliding the turnover preventing portion from the lower case.

Fig. 1 is a perspective view of a mobile terminal device according to Embodiment 1 of the present invention, and shows a condition where a supporting surface of a lower case 1 is extended by a turnover preventing portion 4 and the mobile terminal device is set on a setting surface 5 such as a base.

As shown in Fig. 1, this mobile terminal device is a fold-up type, which is the present mainstream type, and on the front-surface 1a side of the lower case 1, a key operating portion 11 which receives user key inputs and a microphone 16 where a user's voice is inputted are disposed. In addition, the rear surface 1b of the lower case 1 is provided as a supporting surface which comes in contact with the setting surface 5.

At nearly the center of the front surface 2a of an upper case 2, a display portion 12 composed of a display device such as an LCD is provided, and in the vicinity of the center of the display portion 12, the center of gravity 2c of the upper case 2 exists. Furthermore, on the surface 2a, a camera 13 for shooting images and a speaker 15 for transmitting sound to a user are disposed.

The upper case 2 and the lower case 1 are coupled by a shaft-like coupling portion 3. When the upper case 2 and the lower case 1 are folded up and closed, the front surface 2a of the upper case 2 and the front surface 1a of the lower case 1 are faced to each other. In contrast thereto, when the upper case 2 and the lower case 1 are opened, the front surface 2a of the upper case 2 is faced to the user side, whereby the user can view display contents in the display portion 12, shoot him/herself and peripheral objects by a camera 13, and hear a voice reproduced by the speaker 15.

In addition, since the front surface 1a of the lower case 1 is exposed, the user can, by use of the key operating portion 11, input desirable information into the mobile terminal device and input a voice via the microphone 16.

In recent years, because of improvements in the performance of devices, the display portion 12, etc., has become increasingly heavier, and in general, there is a tendency toward a top-heavy weight balance, in which the upper case 2 is heavier than the lower case 1, therefore, instability easily occurs when the device is placed on the setting surface 5.

However, in the present embodiment, as shown in Fig. 1, the supporting surface (herein, the rear surface 1b) of the lower case 1 is extended by the turnover preventing portion 4, whereby stability when the mobile terminal device is placed on the setting surface 5 can be improved. Accordingly, the optical axis of the camera 13 is prevented from shaking during shooting with the camera 13, thus a stable shooting result can be obtained.

In the above, the turnover preventing portion 4 is attached to the rear of the upper case 2, which is the direction where a turnover is most likely to occur. As a result, high stability can be obtained.

Herein, in the condition shown in Fig. 1, it is desirable that, for an improvement in stability, a bottom portion 4b of the turnover preventing portion 4 and the supporting surface (herein, the rear surface 1b) are of one plane. However, inclusion of a slight difference in height or a slight difference in level is still sufficient for practical purposes, and such a case is also included in the present invention.

Now, construction examples of the turnover preventing portion 4 according to Embodiment 1 will be described. In these construction examples, a contrivance has been carried out so that the turnover preventing portion 4 is protected from damage and so that the turnover preventing portion 4 does not become an obstacle when the supporting surface is not extended by the turnover protecting portion 4. Furthermore, in the drawings according to the following construction examples, the coupling portion 3 and the upper case 2 are omitted for the sake of simplification of the drawings unless particularly needed.

### <Construction Example 1>

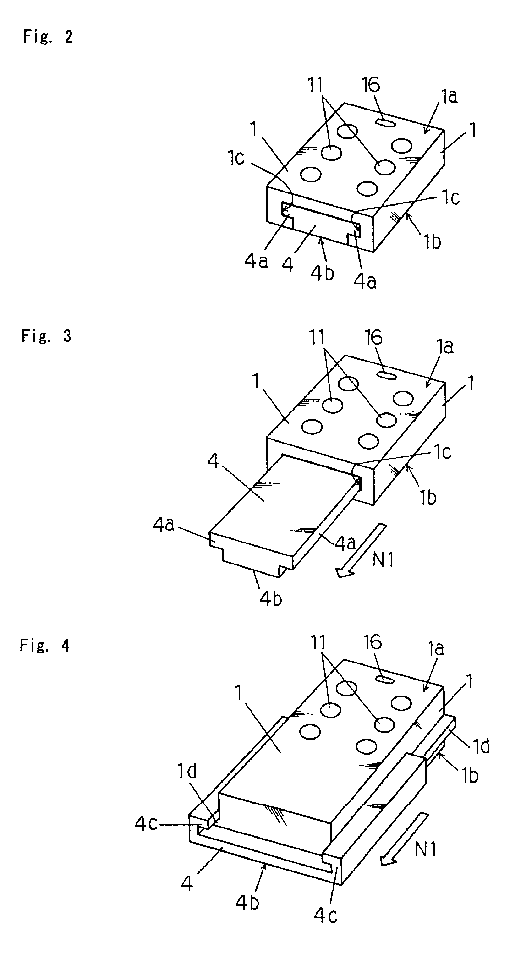

Fig. 2 and Fig. 3 concern Construction Example 1. As shown in Fig. 2, in Construction Example 1, the turnover preventing portion 4 is completely stored in the lower case 1 in a condition where the turnover preventing portion 4 is not used. In greater detail, as a whole, the turnover preventing portion 4 is composed of a plate-like member and a cross-sectional shape thereof is provided in an approximately T-shape

Namely, brim portions 4a are formed by bulging upper portions on both sides of the turnover preventing portion 4 outward. On the other hand, in the lower case 1, guide grooves 1c which are engaged with these brim portions 4a so as to be freely slidable are formed.

Accordingly, for extending the supporting surface, the turnover preventing portion 4 is drawn out from the lower case 1 as shown by the arrow N1 of Fig. 3. Thus, the rear surface 1b of the lower case 1 is extended by the bottom portion 4b of the turnover preventing portion 4.

### <Construction Example 2>

In Construction Example 2, unlike Construction Example 1 where the turnover preventing portion 4 is stored inside the lower case 1, the turnover preventing portion 4 is attached to the outside of the lower case 1 as shown in Fig. 4. Namely, rail-like brim portions 1d are provided in a protruding manner on the outside of the lower case 1, and channel portions 4c which are provided in the turnover preventing portion 4 and whose section has a C-shape are engaged with the brim portion 1d so as to be freely slidable.

In such a manner as well, similar to Construction Example 1, the supporting surface can be extended by drawing out in the direction of arrow N1, and if the turnover preventing portion 4 is slid in a direction opposite to the arrow N1 direction, the turnover preventing portion 4 can be stored so as not to become an obstacle.

### <Construction Example 3>

In Construction Examples 1 and 2, the supporting surface 4 has been extended by drawing out the turnover preventing portion 4 by hand in principle. On the other hand, in Construction Example 3, a sliding mechanism 20 is provided and, by only opening the lower case 1 and the upper case 2, the supporting surface is extended by the turnover preventing portion 4. According to the sliding mechanism 20, an angle of rotation between the lower case 1 and upper case 2 and a sliding amount of the turnover preventing portion 4 change in an interlocked manner.

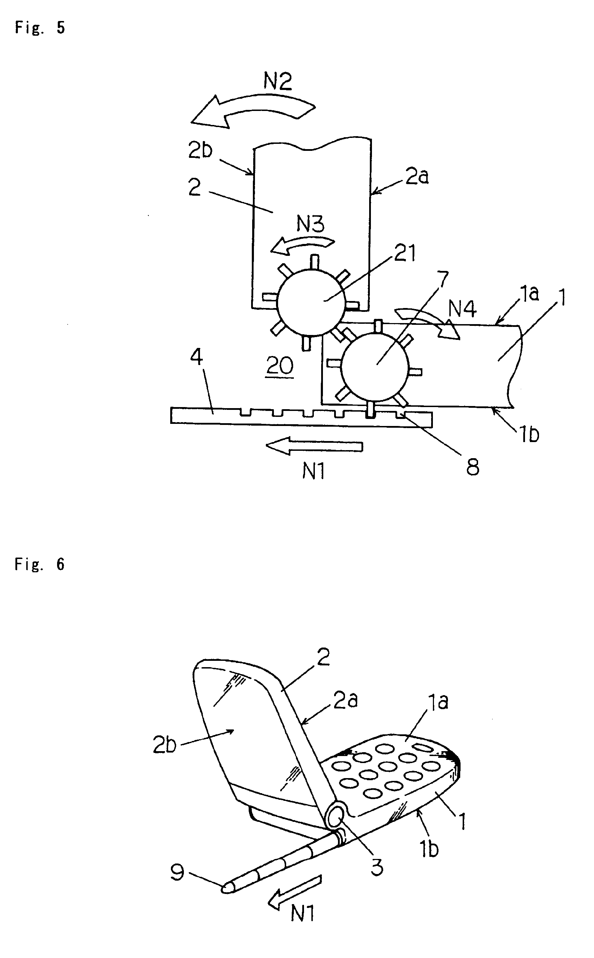

As shown in Fig. 5, this slide mechanism 20 includes the following elements. A first toothed gear 21 is attached so as to be non-rotatable in the vicinity (base end portion) of the coupling portion 3 of the upper case 2. Thereby, the first toothed gear 21 rotates in an integrated manner with the upper case 2.

In addition, a second toothed gear 7, which engages with the first toothed gear 21, is attached so as to be rotatable in the vicinity of the coupling portion 3 (base end portion) of the lower case 1. Furthermore, the second toothed gear 7 is engaged with a groove 8 formed on the turnover preventing portion 4. The grooves 8 and the second toothed gear 7 are of a rack-and-pinion relationship, respectively.

Moreover, respective width directions of the first toothed gear 21, the second toothed gear 7, and the grooves 8 are orthogonal to the arrow N1 direction.

Accordingly, when a user rotates the upper case 2 in the direction of arrow N2 for the purpose of opening the lower case 1 and the upper case 2, the first toothed gear 21 rotates in the direction of arrow N3, the second toothed gear 7 rotates in the direction of arrow N4, and consequently, the turnover preventing portion 4 slides in the arrow N1 direction.

Thereby, it becomes possible to slide the turnover preventing portion 4 when needed, by a necessary amount.

As a matter of course, the illustrated sliding mechanism 20 has been shown merely by way of example, and it is also possible to, by changing the size and the number of teeth of the toothed gears 6 and 7, determine an optimal position of the turnover preventing portion based on a positional relationship between the lower case 1 and upper case 2. In addition, in place of the toothed gears 6 and 7 and the grooves 8, screws and springs, etc., may be used.

### (Embodiment 2)

In Embodiment 1, the supporting surface has been extended by sliding the turnover preventing portion 4 composed of a plate-like member. In Embodiment 2, as shown in Fig. 6, a supporting surface is extended by extending and retracting a stick-like member. In particular, herein, an antenna 9 is strechable and used as the stick-like member and a position of the antenna 9 is determined so that the antenna 9 and the supporting surface are roughly of one plane.

In most cases, a mobile terminal device is originally equipped with an antenna 9. Accordingly, by making the antenna 9 function concurrently as a turnover preventing portion 4, stability of the mobile terminal device can be improved while an increase in the number of components is suppressed.

### (Embodiment 3)

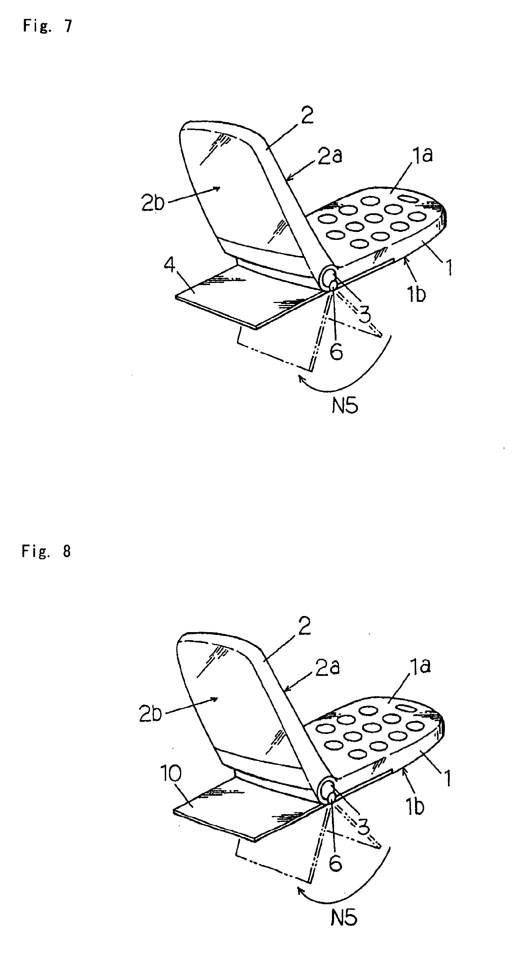

In Embodiment 1, the supporting surface has been extended by sliding the turnover preventing portion 4 composed of a plate-like member. In Embodiment 3, as shown in Fig. 7, the edge of one end of a turnover preventing portion 4 is pivotally supported on any of the coupling portion 3, lower case 1, and upper case 2 by use of a rotation shaft 6.

The rotation shaft 6 may be constructed as one body with a rotation shaft of the coupling portion 3 or may be provided as a separate body. In Fig. 7, a completely stored condition, a mid-rotation condition, and a completely opened condition are simultaneously shown.

Furthermore, as shown in Fig. 8, the turnover preventing portion 4 may be constructed with inclusion of a plate-like battery 10. As regards the turnover preventing portion, in most cases, a mobile terminal device is originally equipped with a battery 10. Accordingly, by making the battery 10 function concurrently as a turnover preventing portion 4, stability of the mobile terminal device can be improved while an increase in the number of components is suppressed.

### (Embodiment 4)

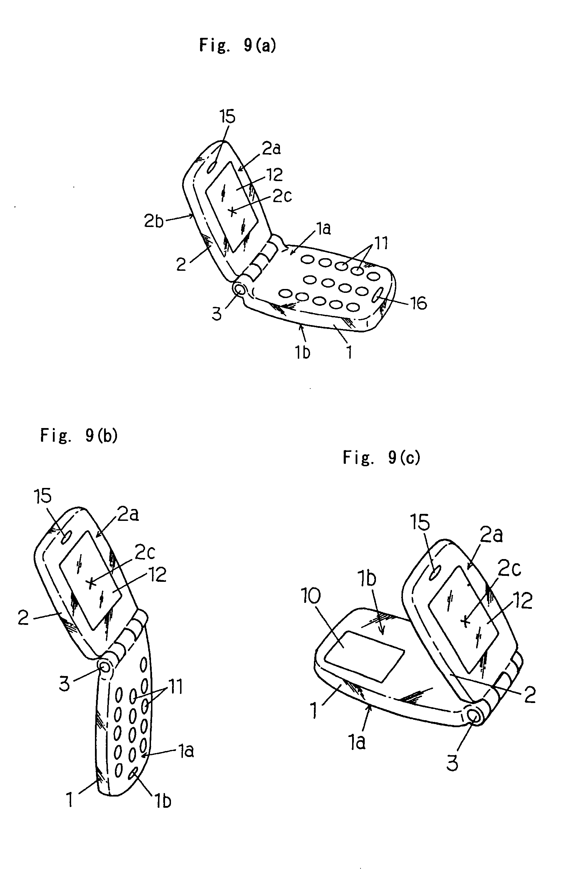

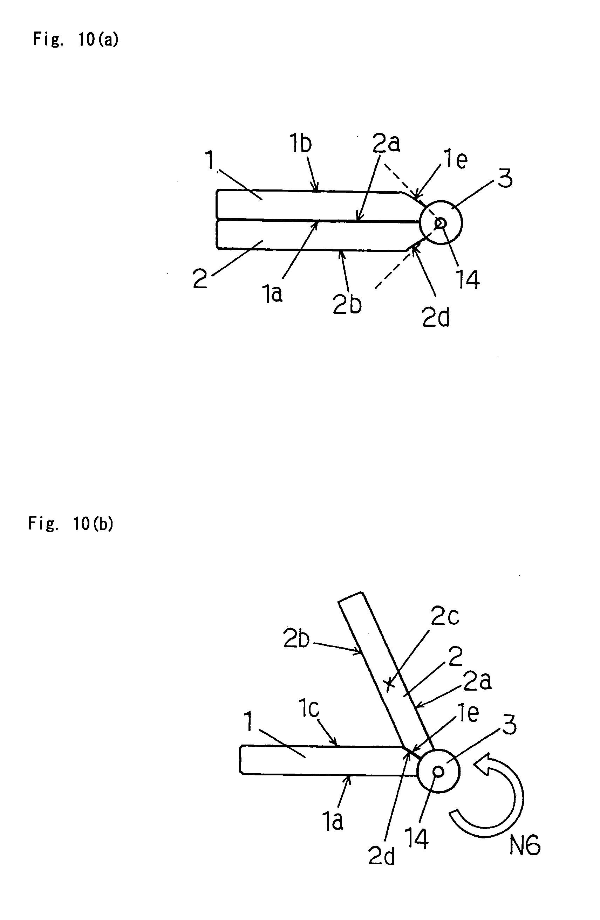

Now, Embodiment 4 will be described by use of Figs. 9 and Figs. 10. In a mobile terminal device according to the present embodiment, a coupling portion 3 couples an upper case 2 with a lower case 1 so that the upper case 2 can take, against the lower case 1, a turnover preventing posture where the center of gravity 2c of the upper case 2 is located above the lower case 1. In detail, a construction where the lower case 1 and upper case 2 are rotated by 270 degrees or more is provided, therefore, unlike Embodiment 1, it is unnecessary to provide a turnover preventing portion 4.

Fig. 9(a) shows a normal usage condition where a user uses a mobile terminal device by holding the same in his/her hand. Starting from a condition of Fig. 9(a), through a condition with an approximately 180 degree-rotation as shown in Fig. 9(b), the mobile terminal device of the present embodiment reaches a turnover preventing posture with an approximately 270 degree-rotation shown in Fig. 9(c) and is set on a setting surface 5.

When a mobile terminal device is in a turnover preventing posture, the center of gravity 2c of the upper case 2 is above the lower case 1, consequently, the center of gravity of the whole mobile terminal device is always above the lower case 1. Thereby, irrespective of the position of the upper case 2, stable setting can be carried out. Therefore, even if the upper case 2 becomes heavy, the mobile terminal device does not turn over, thus high stability can be obtained. Figs. 10 show a detailed construction example of a mobile terminal device which can take a turnover preventing posture. As shown in Fig. 10(a), tapered surfaces 1e and 2d are formed on the base end portions of the lower case 1 and upper case 2 so that, in a condition where a rotation angle between the lower case 1 and upper case 2 is zero degrees (a closed condition), the lower case 1 and the upper case 2 can be stored within an angle of 90 degrees from the center 14 of the coupling portion 3 (inside the broken lines).

With this construction, as shown by the arrow N6 of Fig. 10(b), if the rotation angle becomes on the order of 270 degrees, these tapered surfaces 1e and 2d abut against each other, whereby a turnover preventing posture is formed. At this time, the front surface 1a of the lower case 1 serves as a supporting surface.

### (Embodiment 5)

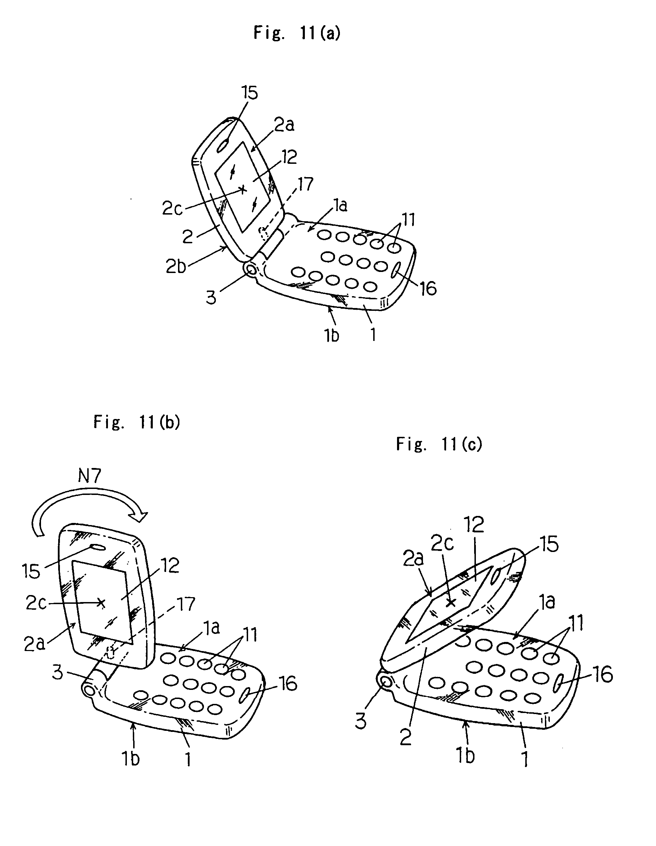

Now, Embodiment 5 of the present invention will be described by use of Figs. 11. A difference from Embodiment 4 exists in that the coupling portion 3 and the upper case 2 are not directly coupled but are coupled via a vertical shaft 17. Thereby, as shown by an arrow N7 of Fig. 11(b), the upper case 2 can be rotated by approximately 180 degrees, vertically to the rotation shaft direction of the coupling portion 3.

In a turnover preventing posture according to Embodiment 5, the center of gravity of the whole mobile terminal device is always above the lower case 1, therefore, irrespective of the position of the upper case 2, stable setting can be carried out. Therefore, even if the upper case 2 becomes heavy, the mobile terminal device 2 does not turn over, thus high stability can be obtained.

Moreover, in a turnover preventing posture, since the front surface 1a of the lower case 1 faces up and a key operating portion 11 are not in contact with a setting surface 5, a user can carry out key operations while viewing the display portion 12.

### (Others)

In any of Embodiments 1 through 5, it is preferable to, after setting stability has been improved by extending the supporting surface by the turnover preventing portion 4 or by taking a turnover preventing posture, reverse images of the user him/herself shot by the camera 13 left to right and cause the display portion 12 to display the images. Thus, it becomes possible to use the mobile terminal device as a mirror. In detail, it is preferable to exchange, with respect to one line of a shot image, pixels at an equal distance from the line center.

In addition, in any of Embodiments 1 through 5, it is preferable to, after setting stability has been improved by extending the supporting surface by the turnover preventing portion 4 or by taking a turnover preventing posture, inform the user by a sound. In detail, it is preferable to, when a mobile terminal device comes into a positional relationship where the supporting surface has been extended by the turnover preventing posture 4 or reaches a turnover preventing posture, produce a mechanical click or sound a buzzer from the speaker 15.

Thereby, since the user can grasp an understanding of the situation based on the sound, user interfaceability is improved.

Furthermore, an elastic body such as a spring may be used to apply a force so that the turnover preventing portion 4 is slid or rotated. Thereby, the user can instantaneously store or unfold the turnover preventing portion 4.

Meanwhile, there exists a relatively large information processing terminal device which seemingly resembles a mobile terminal device, at which the present invention targets. Such a relatively large information processing terminal device is a word processor, a personal computer or the like, and is constructed so that an upper case provided with a display portion and a lower case provided with a keyboard, etc., can be folded up by 180 degrees or more. In this type of information processing terminal, a tablet function is provided for the display portion, and a folding action is carried out for the purpose of using the tablet function for handwriting input, etc.

Moreover, in this type of information processing terminal device, a hard disk device, a battery, and other heavy components are stored in the lower case, the lower case is heavier than the upper case, thereby resulting in a top-light weight balance, and in addition, the area of the back surface of the lower case is large.
Accordingly, this type of information processing terminal device itself is stable with no particular contrivance, therefore, no turnover preventing measures are required. In short, this type of information processing terminal is completely different in technical background from a mobile terminal device, for which the present invention targets.

According to the present invention, in a fold-up mobile terminal device, high stability can be obtained irrespective of the weight of the upper case.

In addition, in the mobile terminal device, stability can be obtained even when the angle of the upper case is freely changed for higher visibility of the display portion.

Furthermore, the turnover preventing portion can be slid when needed, by a necessary amount.

Moreover, with the mobile terminal device placed, it is possible to perform a key operation with one hand, and no influence due to a change in position is exerted on radio waves, therefore, a stable transmission rate can be obtained.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A mobile terminal device comprising:
a lower case(1) having a supporting surface(1b), formed so as to be placed on a base by bringing said supporting surface(1b) into contact with the base,
an upper case(2),
a coupling portion(3) which couples said upper case(2) and said lower case(1) so as to be foldable, so that the front surface(2a) of said upper case(2) and the front surface(1a) of said lower case(1) are faced to each other in a condition where said upper case(2) and said lower case(1) are closed, and
a turnover preventing portion(4) to extend said supporting surface(1b).

2. A mobile terminal device as set forth in Claim 1, wherein
a display portion(12) is disposed on the front surface(2a) of said upper case(2), a key operating portion(11) is disposed on the front surface(1a) of said lower case(1).

3. A mobile terminal device as set forth in Claim 2, further comprising a camera(13) for shooting images, wherein
when said turnover preventing portion(4) reaches a condition where said supporting surface(1b) is extended by said turnover preventing portion(4), images shot by said camera(13) are displayed in a left-to-right reversed manner in said display portion(12).

4. A mobile terminal device as set forth in Claim 1, wherein
said upper case(2) is greater in weight than said lower case(1).

5. A mobile terminal device as set forth in Claim 1, wherein
said turnover preventing portion(4) is provided so as to be slidable with respect to said lower case(1), and said supporting surface(1b) is extended by a protrusion of said turnover preventing portion(4) from said lower case(1).

6. A mobile terminal device as set forth in Claim 5, further comprising a sliding mechanism(20) which determines a sliding amount of said turnover preventing portion(4) according to an angle created by said upper case(2) and said lower case(1).

7. A mobile terminal device as set forth in Claim 6, wherein
said sliding mechanism(20) comprises:
a first toothed gear(21) which is provided in the vicinity of said coupling portion(3) of said upper case(2) so as to rotate in an integrated manner with said upper case(2),
a second toothed gear(7) which is provided so as to be freely rotatable in the vicinity of said coupling portion(3) of the said lower case(1) and which engages with said first toothed gear(21), and
grooves(8) which are formed on said turnover preventing portion(4) and which engage with said second toothed gear(7).

8. A mobile terminal device as set forth in Claim 1, wherein
said turnover preventing portion(4) is provided so as to be rotatable with respect to said lower case(1), between a closing position where the same is in contact with said lower case(1) and a opening position where the same is distant from said lower case(1), and said supporting surface(1b) is extended by a rotation of said turnover preventing portion(4) to the opening position.

9. A mobile terminal device as set forth in Claim 8, wherein
the edge of one end of said turnover preventing portion(4) is pivotally supported on any of said coupling portion(3), said lower case(1), and said upper case(2) by a rotation shaft(6).

10. A mobile terminal device as set forth in Claim 1, wherein
said turnover preventing portion(4) is composed of a plate-like member to extend said supporting surface(1b).

11. A mobile terminal device as set forth in Claim 1, wherein
a battery(10) is disposed in said turnover preventing portion(4).

12. A mobile terminal device as set forth in Claim 1, wherein
said turnover preventing portion(4) is composed of a stick-like member to extend said supporting surface.

13. A mobile terminal device as set forth in Claim 12, wherein
said stick-like member comprises a stretchable antenna(9).

14. A mobile terminal device as set forth in Claim 1, further comprising means operable to inform a user that said turnover preventing portion(4) has reached a condition to extend said supporting surface(1b).

15. A mobile terminal device comprising:
a lower case(1) having a supporting surface(1b), formed so as to be placed on a base by bringing said supporting surface(1b) into contact with the base,
an upper case(2), and
a coupling portion(3) which couples said upper case(2) and said lower case(1) so as to be foldable, so that the front surface(2a) of said upper case(2) and the front surface(1a) of said lower case(1) are faced to each other in a condition where said upper case(2) and said lower case(1) are closed, wherein
said coupling portion(3) couples said upper case(2) and said lower case(1) so that said upper case(2) can take, against said lower case(1), a turnover preventing posture where the center(2c) of gravity of said upper case(2) is located above said lower case(1).

16. A mobile terminal device as set forth in Claim 15, wherein
a display portion(12) is disposed on the front surface(2a) of said upper case(2), a key operating portion(11) is disposed on the front surface(1a) of said lower case(1).

17. A mobile terminal device as set forth in Claim 16, further comprising a camera(13) for shooting images, wherein
when said upper case(2) and said lower case(1) reach a turnover preventing posture, images shot by said camera(3) are displayed in a left-to-right reversed manner in said display portion(12).

18. A mobile terminal device as set forth in Claim 15, wherein
said upper case(2) is greater in weight than said lower case(1).

19. A mobile terminal device as set forth in Claim 15, wherein
with a turnover preventing posture, the back surface(2b) of said upper case(2) and the back surface(1b) of said lower case(1) are faced to each other.

20. A mobile terminal device as set forth in Claim 15, wherein
with a turnover preventing posture, the back surface(2b) of said upper case(2) and the front surface(1a) of said lower case(1) are faced to each other.

21. A mobile terminal device as set forth in Claim 15, further comprising means operable to inform a user that said upper case(2) and said lower case(1) have reached a turnover preventing posture.
